Europäisches Patentamt

European Patent Office

Office européen des brevets

(19)

(11) Veröffentlichungsnummer : **0 325 619 B1**

(12) # EUROPÄISCHE PATENTSCHRIFT

(45) Veröffentlichungstag der Patentschrift :
24.07.91 Patentblatt 91/30

(51) Int. Cl.⁵ : **G01G 21/24**

(21) Anmeldenummer : **88902115.0**

(22) Anmeldetag : **10.03.88**

(86) Internationale Anmeldenummer :
**PCT/CH88/00056**

(87) Internationale Veröffentlichungsnummer :
**WO 89/01611 23.02.89 Gazette 89/05**

(54) **KRAFTMESSER MIT PARALLELFÜHRUNG.**

(30) Priorität : **08.08.87 CH 3040/87**

(43) Veröffentlichungstag der Anmeldung :
**02.08.89 Patentblatt 89/31**

(45) Bekanntmachung des Hinweises auf die
Patenterteilung :
**24.07.91 Patentblatt 91/30**

(84) Benannte Vertragsstaaten :
**CH DE FR GB IT LI NL SE**

(56) Entgegenhaltungen :
**EP-A- 0 094 290**
**EP-A- 0 195 875**
**DE-U- 8 633 612**
**GB-A- 2 111 228**

(56) Entgegenhaltungen :
**US-A- 2 576 417**
**US-A- 2 597 751**
**US-A- 3 805 604**
**US-A- 4 009 608**

(73) Patentinhaber : **Wirth, Gallo Messtechnik AG**
**Sonnenbergstrasse 55**
**CH-8032 Zürich (CH)**

(72) Erfinder : **WIRTH, Johannes**
**Sonnenbergstr. 55**
**CH-8032 Zürich (CH)**
Erfinder : **GALLO, Mario**
**Krönleinstr. 1**
**CH-8044 Zürich (CH)**

(74) Vertreter : **Salgo, Reinhold Caspar, Dr.**
**Patentanwalt Aretshalde 160**
**CH-8607 Aathal (CH)**

## Beschreibung

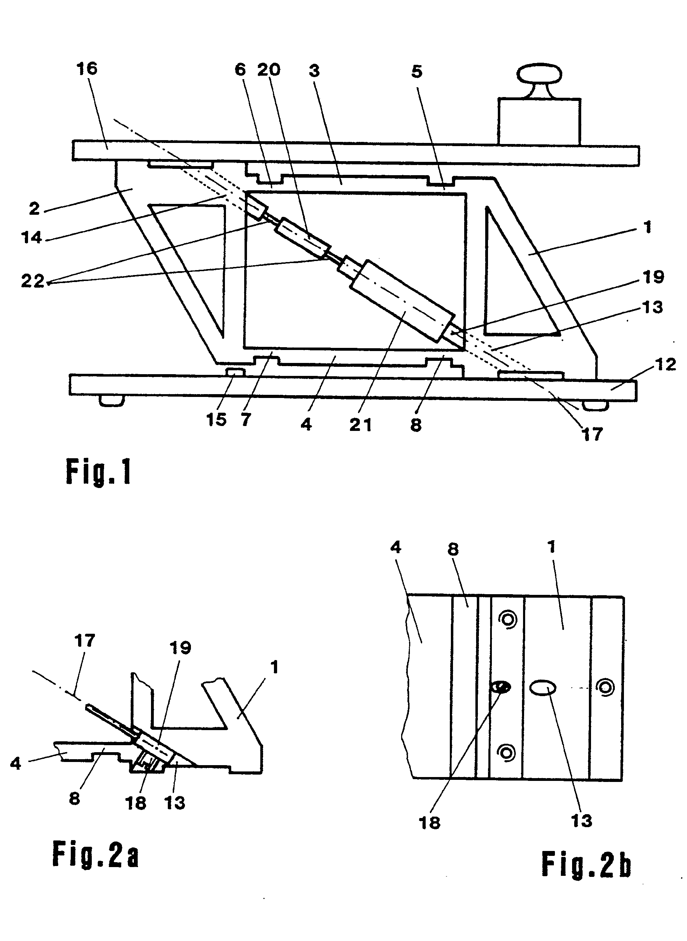

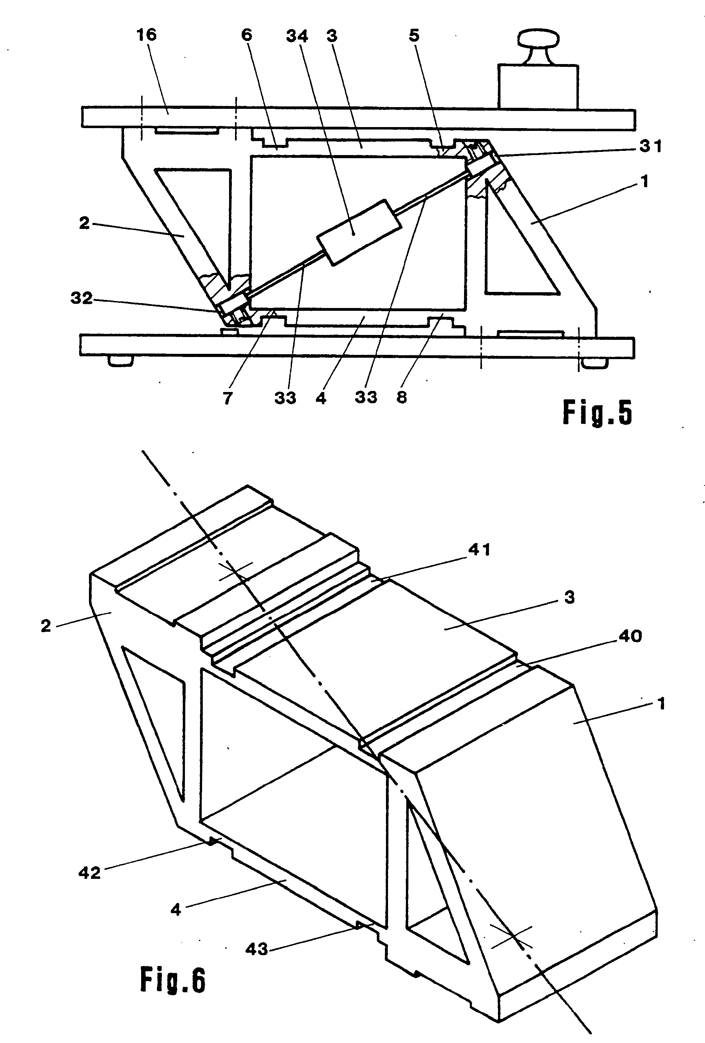

Die vorliegende Erfindung bezieht sich auf einen Kraftmesser mit einer elastisch untersetzenden Parallelführung, im besonderen auf einen solchen Kraftmesser, bei dem der Lastaufnehmer zwischen den Organen der Parallelführung der Ausführungsbeispiele gemäss Fig. 1 und 5.angeordnet ist und gleichzeitig als Fesselung für den ganzen Kraftmesser dient. Solche Kraftmesser sind bekannt, beispielsweise aus der EP-A-85 810 126.4-(EP-A1-195 875). Dort ist der Lastaufnehmer senkrecht zu den die Parallelführung bildenden Lenkern und parallel zur zu messenden Kraft eingebaut. Zudem ist das Mess-System, gebildet aus der Parallelführung und dem Lastaufnehmer mit je einem weiteren Lenkersystem einerseits am Gestell, anderseits am Lastträger befestigt, um lastbedingte Verformungen von Gestell und Lastträger vom Mess-System fernzuhalten (Drainage). Diese Bauart ist kompliziert, entsprechend teuer und ergibt eine beträchtliche Bauhöhe. Dies insbesondere, weil sowohl auf der Seite des Gestells, als auch auf der Seite des Lastträgers Kragarme vorgesehen werden müssen, die die Kräfte auf den Lastaufnehmer übertragen.

Die Aufgabe der vorliegenden Erfindung ist es, die genannten Nachteile zu überwinden und ein Mess-System zu schaffen, das einerseits niedrig gebaut, einfach — und damit kostengünstig — herzustellen ist und ferner ohne Drainage-Hilfsmittel weitgehend unempfindlich ist gegenüber dem Auflageort der Last, sofern der Kraftmesser zur Gewichtermittlung eingesetzt wird.

Die Lösung der gestellten Aufgabe weist die im Patentanspruch 1 oder 12 formulierten Merkmale auf.

Anhand der beiliegenden Zeichnung wird die Erfindung näher erläutert. Es zeigen

| | |
|---|---|
| Fig. 1 | ein erstes Ausführungsbeispiel in Seitenansicht |
| Fig. 2 a, b | ein erstes Detail des ersten Ausführungsbeispiels in zwei Ansichten |
| Fig. 3 a, b, c | ein zweites Detail der ersten Ausführungsbeispieles |
| Fig. 4 | ein zweites Ausführungsbeispiel in Seitenansicht |
| Fig. 5 | ein drittes Ausführungsbeispiel, ebenfalls in Seitenansicht |
| Fig. 6 | eine schematische Darstellung zur Erläuterung des Herstellungsprozesses der Parallelführung. |
| Fig. 7 | ein viertes Ausführungsbeispiel mit zwei Kreuzgelenken, |
| Fig. 8 | eine Variante zu Fig. 6 |

Die erfindungsgemässe Vorrichtung gemäss Fig. 1 und 2 besteht aus einem Gestell 1 und einem Lastträger 2, zwei im wesentlichen horizontalen Platten 3, 4 und vier Bandgelenken 5 bis 8. Das Gestell 1, das aus einem im wesentlichen dreieckigen Hohlprofil besteht, ist beispielsweise mittels Schrauben an einer Grundplatte 12 befestigt. Die zwei Bandgelenke 5, 8 verbinden die Platten 3 und 4 mit dem Gestell 1 auf der einen Seite. Der Lastträger 2 ist durch die Bandgelenke 6, 7 ebenfalls mit den Platten 3, 4 verbunden. Dadurch, dass die Platten 3, 4 im wesentlichen gleich lang und im wesentlichen parallel sind, und die Bandgelenke 5 bis 8 gleich ausgebildet werden, entsteht eine elastische Paralleführung für den Lastträger 2 ; dieser besteht aus einem, demjenigen des Gestells 1 entsprechenden, Hohlprofil.

Am Lastträger 2 ist, ebenfalls beispielsweise mit Schrauben, eine Waagschale befestigt, die zur Aufnahme des Wägegutes dient. An der Unterseite des Gestells 1 und an der Oberseite des Lastträgers 2 befinden sich je eine zylindrische Bohrung 13 bzw. 14, die koaxial zu einer Achse 17 angebracht sind, wobei die Achse 17 diagonal durch die ganze Parallelführung läuft. In jeder der Bohrungen 13, 14 ist — mit Hilfe einer Schraube 18 — eine Stelze 19 bzw. 20 befestigt. Die Stelzen 19, 20 übertragen lastproportionale Druckkräfte auf einen Lastaufnehmer 21. Dieser erzeugt nach einer dem Stand der Technik angehörenden Methode aus der Kraft-Information ein analoges oder digitales elektrisches Signal. Es kommen hier also beispielsweise in Frage : Dehnungsmessstreifen, Piezoquarze, kapazitive Wandler und solche mit querschwingenden Saiten, beispielsweise nach dem DE Gbm G 86 33 612.6 (DE-U1-86 33 612).

Wird nun die Waagschale 16 mit Wägegut belastet, so findet durch die elastische Paralleführung eine Kraftteilung statt : Der — zumeist — grössere Teil der Gewichtskraft des Wägegutes wird über die Bandgelenke 5 bis 8 und die Platten 3, 4 direkt an das Gestell 1 abgeleitet. Die restliche Kraft verläuft über den Lastaufnehmer 21, durch dessen Diagonalstellung entsprechend vergrössert. Durch diese Kraftteilung entstehen in den Platten 3, 4 zusätzliche Zugkräfte. Wegen der geringen Längsnachgiebigkeit der Platten 3, 4 und der Bandgelenke 5 bis 8 wird die Kraftmessung jedoch nicht beeinträchtigt. Die Bewegung des Lastträgers 2 — durch den Lastaufnehmer 21 gefesselt — ist nunmehr eine virtuelle. An der Grundplatte 12 ist ein Anschlag 15 angebracht, auf dem der Lastträger 2 bei Ueberlast aufsitzt.

Die Kraft, die in der Längsrichtung auf den Lastaufnehmer 21 wirkt, kann aufgeteilt werden, in eine Horizontal- und in eine Vertikalkomponente. Das gegenseitige Verhältnis dieser Komponenten kann im weiten Rahmen zwischen den Werten 1 : 10 bis 10 : 1 variiert werden, je nach den Grössenverhältnissen der Elemente der Parallelführung und dem Orte und der Art der Krafteinleitung.

Anstatt einer Stelze 19 können auch deren zwei vorhanden sein, die beide — parallel nebeneinander und symmetrisch zur Achse 17 — Gestell 1 befestigt sind. Damit wird verhindert, dass der Lastaufnehmer 21 um die Achse 17 Torsionsschwingungen ausführen kann.

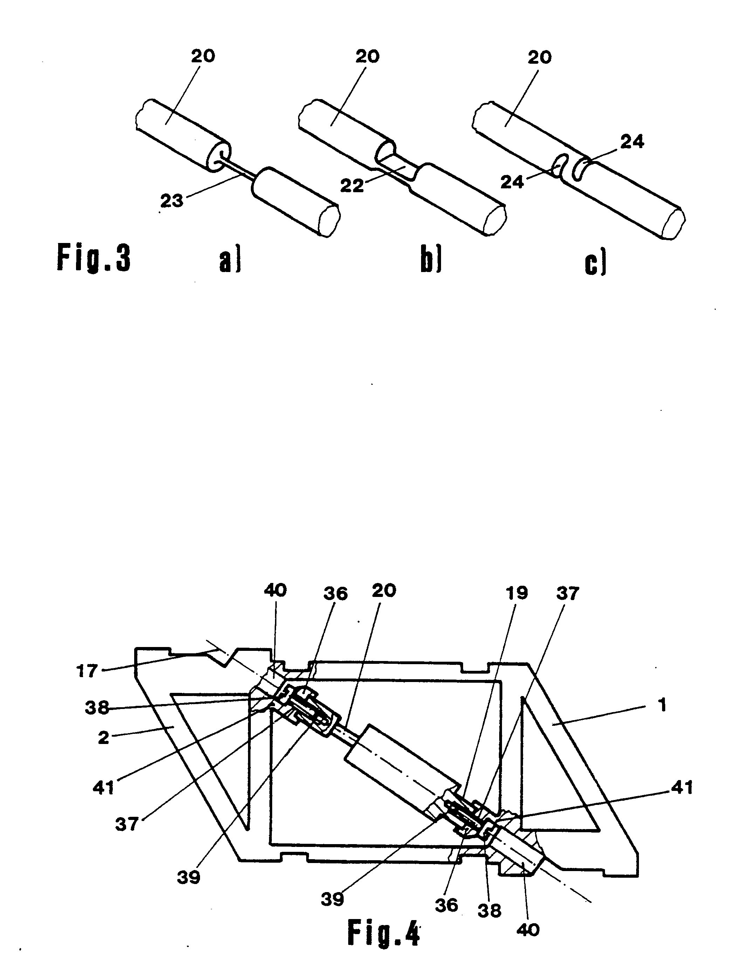

Die kleine — virtuell genannte — Bewegung des Lastträgers 2 bei Belastung führt zu Biegebeanspruchung der Stelzen 19, 20. Diese Biegebeanspruchung wird aufgenommen durch ein Paar von Ausnehmungen 22 beispielsweise an der Stelze 20, im Detail gezeigt in Fig. 3b. Eine in Fig 3a gezeichnete Variante hierzu besteht darin, die Stelze 20 an der gleichen Stelle auf einem kurzen Stück, etwa von der Länge von ein bis zwei Durchmessern der Stelze 20 stark zu verjüngen, so dass eine zylindrische Sollbiegestelle 23 entsteht. Eine weitere Variante zeigt Fig. 3c. Hier sind an der Stelze 20 zwei versetzte Einschnitte 24 angebracht, die einander, in Bezug auf die Längsachse der Stelze 20, gegenüberliegen und über die Mitte der Stelze 20 hinausreichen. Es können an der Stelze jedoch auch zwei Sollbiegestellen nach Fig. 3a, b, c vorhanden sein. Die entweder mit den Ausnehmungen 22, oder mit der Sollbiegestelle 23 oder den Einschnitten 24 versehene Stelze 20 ist in der Lage, die kleinen Verdrehungen und/oder Verbiegungen aufzunehmen, die im normalen Wägebetrieb entstehen. Durch den schrägen Einbau des Lastaufnehmers 21 wird ein konstanter Zusatz an Zugkräften auf die Platten 3,4 und die Bandgelenke 5 bis 8 ausgeübt. Die Längsnachgiebigkeit der die Lenker bildenden Elemente spielt jedoch bei der Kraftmessung eine völlig vernachlässigbare Rolle.

Im Ausführungsbeispiel gemäss Fig. 4 sind die Stelzen 19, 20 wesentlich kräftiger ausgeführt, als diejenigen gemäss Fig. 1. Die Sollbiegestellen sind hier gestellseitig vorgesehen : Sowohl am Gestell 1, als auch am Lastträger 2 sind im wesentlichen gleich ausgebildete Anschlussstücke 36 vorgesehen, die je eine, zu Achse 17 koaxiale, Bohrung 37 tragen. Durch die Bohrung 37 werden Schrauben 38 eingesetzt, die in Gewinde 39 eingreifen, welche in den Stelzen 19, 20 angebracht sind. Die Schrauben 38 werden durch zwei Bohrungen 40 eingeführt und auch angezogen. Die genannten Sollbiegestellen sind verjüngte Partien 41 der Anschlussstücke 36. Auch in diesem Ausführungsbeispiel können die Stelze 19 und die damit verbundenen Befestigungselemente, zur Verhinderung von Torsionsschwingungen um die Achse 17, doppelt vorhanden sein.

Das Ausführungsbeispiel gemäss Fig. 5 hat denselben Grundaufbau, wie jenes gemäss Fig. 1, mit Gestell 1, Lastträger 2, Waagschale 16, Platten 3, 4 und Bandgelenken 5 bis 8. Das Gestell 1 weist oben eine der Bohrung 13 entsprechende Bohrung 31 auf ; die der Bohrung 14 entsprechende Bohrung 32 findet sich unten am Lastträger 2. Die Bohrungen 31, 32 nehmen zwei Kraftübertragungsorgane 33 auf, die entweder als Stelzen oder Zugbänder ausgebildet sein können. Die im Messbetrieb von den Kraftübertragungsorganen 33 übertragenen Zugkräfte wirken auf einen Lastaufnehmer 34, der von anloger Bauart ist, wie der Lastaufnehmer 21 des ersten Ausführungsbeispieles ; der innere Aufbau des Lastaufnehmers macht ihn geeignet zur Messung von Zugkräften. Was zum ersten Ausführungsbeispiel über Verbiegen der Stelzen 19, 20 gesagt wurde, gilt hier analog für die Kraftübertragungsorgane 33.

In Fig. 6 ist der Herstellungsprozess der Parallelführung schematisch dargestellt. Das Gestell 1, der Lastträger 2, die Platten 3, 4 und vier Stege 40 bis 43 sind zu einem Gesamtprofil zusammengefasst, das beispielsweise durch Extrusion oder durch Drahterodieren aus dem Vollen hergestellt ist.

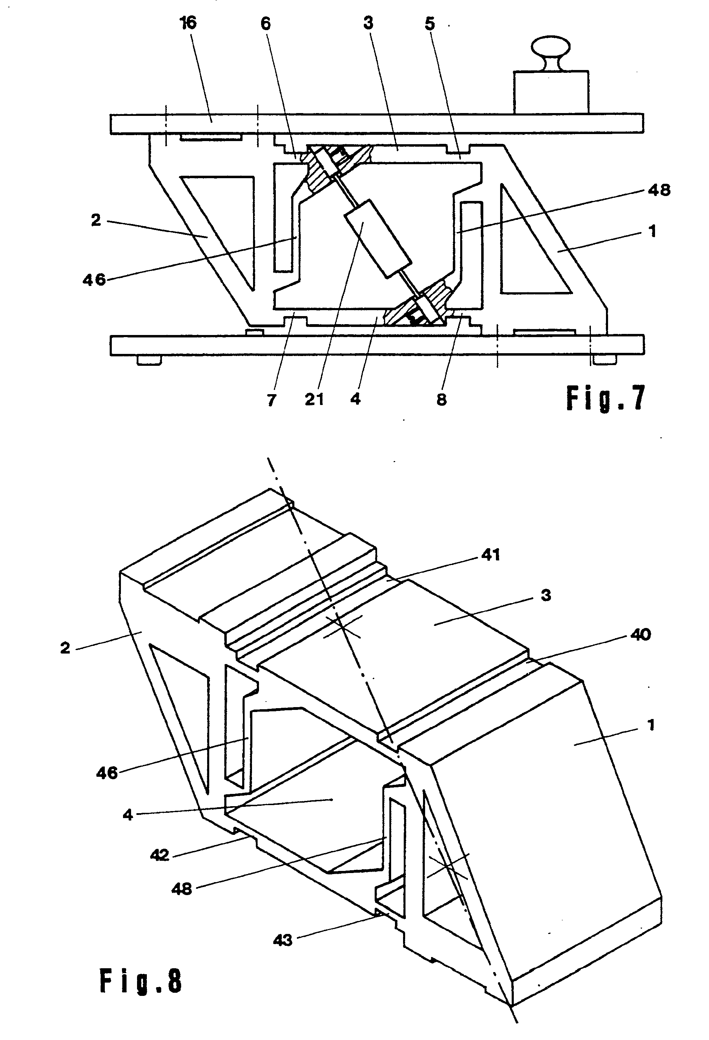

Im Ausführungsbeispiel gemäss Fig. 7 sind die Bandgelenke 6, 8 der vorigen Ausführungsbeispiele ersetzt durch Kreuzgelenke. Das eine Kreuzgelenk besteht aus dem ursprünglichen horizontalen Bandgelenk 6, das hier durch ein vertikales Band 46 ergänzt wird. Analog dazu besteht das andere Kreuzgelenk aus dem ursprünglichen Bandgelenk 8, ergänzt durch ein vertikales Band 48. Der Lastaufnehmer 21 ist nun zwischen dem lastträgerseitigen Ende der Platte 3 und dem gestellseitigen Ende der Platte 4 befestigt. Die Art der Befestigung des Lastaufnehmers 21 und die Art der Krafteinleitung entsprechen denjenigen von Fig. 1 ; auf Details wurde daher in der Fig. 7 verzichtet.

Fig. 8 zeigt das Profil, aus dem die Parallelführung hergestellt wird. In Bezug auf Fig. 6 ist die Darstellung erweitert um die beiden Bänder 46, 48. Das Profil besteht aus einem Stück und kann entweder durch Extrusion oder durch Drahterodieren aus dem Vollen hergestellt werden.

## Patentansprüche

1. Kraftmesser mit einer elastisch untersetzenden Parallelführung, bei dem der einzige Lastaufnehmer (21) zwischen den Organen der Parallelführung (1 bis 10) angeordnet ist und gleichzeitig als Fesselung für den Kraftmesser dient, dadurch gekennzeichnet,

— dass der Lastaufnehmer (21) direkt vom Lastträger (2) und vom Gestell (1) beaufschlagt ist,
— dass die Kraftübertragungsorgane (19, 20, 33) am Lastträger (2) und am Gestell (1) angebracht sind, dass die Wirkungslinie der vom Lastaufnehmer (21) gemessenen Kraft sowohl eine Horizontal-, als auch eine Vertikalkomponente hat, deren Verhältnis im Rahmen von 1 : 10 bis 10 : 1 liegt,

— und dass das Gestell (1), der Lastträger (2), die Platten (3, 4) und die Bandgelenke (5 bis 8) aus einem einzigen Stück gefertigt sind.

2. Kraftmesser nach Patentanspruch 1, dadurch gekennzeichnet, dass das einzige Stück aus dem die Teile (1 bis 8) gefertigt sind, ein Abschnitt eines extrudierten Profiles ist.

3. Kraftmesser nach Patentanspruch 1, dadurch gekennzeichnet, dass das einzige Stück aus dem die Teile (1 bis 8) gefertigt sind, durch Drahterodieren aus dem Vollen hergestellt ist.

4. Kraftmesser nach Patentanspruch 1, dadurch gekennzeichnet, dass die Kraftübertragungsorgane (19, 20) am Lastträger (2) und am Gestell (1) so angeordnet sind, dass der Lastaufnehmer (21) von Druckkräften beaufschlagt wird.

5. Kraftmesser nach Patentanspruch 4, dadurch gekennzeichnet, dass die Kraftübertragungsorgane Stelzen (19, 20) sind, von denen mindestens eine zwei Ausnehmungen (22) aufweist.

6. Kraftmesser nach Patentanspruch 4, dadurch gekennzeichnet, dass die Kraftübertragungsorgane Stelzen (19, 20) sind, von denen mindestens eine eine Soll-Biegestelle (23) aufweist.

7. Kraftmesser nach Patentanspruch 4, dadurch gekennzeichnet, dass die Kraftübertragungsorgane Stelzen (19, 20) sind, von denen mindestens eine zwei einander versetzt gegenüberliegende Einschnitte (24) aufweist.

8. Kraftmesser nach einem der Patentansprüche 5, 6, und 7, dadurch gekennzeichnet, dass zwei Stelzen (19) vorhanden sind, die parallel nebeneinander und symmetrisch zu einer Achse (17) angeordnet sind, wobei die Achse (17) vom oberen Teile des Lastträgers (2) zum unteren Teile des Gestells (1) diagonal durch den ganzen Kraftmesser verläuft.

9. Kraftmesser nach Patentanspruch 4, dadurch gekennzeichnet, dass sowohl das Gestell (1), als auch der Lastträger (2) je mindestens ein Anschlussstück (36) mit einer verjüngten Partie (41) tragen, an denen die als Stelzen (19, 20) ausgebildeten Kraftübertragungsorgane befestigt sind.

10. Kraftmesser nach Patentanspruch 1, dadurch gekennzeichnet, dass die Kraftübertragungsorgane (19, 20) am Lastträger (2) und am Gestell (1) so angeordnet sind, dass der Lastaufnehmer (21) von Zugkräften beaufschlagt wird.

11. Kraftmesser nach Patentanspruch 4 oder 10, dadurch gekennzeichnet, dass der einzige Lastaufnehmer ein Ein-Saitendynamometer ist.

12. Kraftmesser mit einer elastisch untersetzenden Parallelführung, bei dem der einzige Lastaufnehmer (21) zwischen den Organen der Parallelführung (1 bis 10) angeordnet ist und gleichzeitig als Fesselung für den Kraftmesser dient, dadurch gekennzeichnet,
— dass der Lastaufnehmer (21) direkt von den parallelen Platten (3, 4) beaufschlagt ist,
— dass die Kraftübertragungsorgane (19, 20, 33) an der oberen und der unteren Platte (3, 4) angebracht sind, dass die Wirkungslinie der vom Lastaufnehmer (21) gemessenen Kraft sowohl eine Horizontal-, als auch eine Vertikalkomponente hat, deren Verhältnis im Rahmen von 1 : 10 bis 10 : 1 liegt,
— dass das Bandgelenk (6) durch ein zu ihm senkrechtstehendes Band (46) zum Kreuzgelenk ergänzt ist, wobei das Band (46) mit dem Lastträger (2) und der oberen Platte (3) fest verbunden ist,
— dass das Bandgelenk (8) durch ein zu ihm senkrechtstehendes Band (48) zum Kreuzgelenk ergänzt ist, wobei das Band (48) mit dem Gestell (1) und der unteren Platte (4) fest verbunden ist
— und dass das Gestell (1), der Lastträger (2), die Platten (3, 4), die Bandgelenke (5 bis 8) und die Bänder (46, 48) aus einem einzigen Stück gefertigt sind,

13. Kraftmesser nach Patentanspruch 12, dadurch gekennzeichnet, dass das einzige Stück aus dem die Teile (1 bis 8 und 46, 48) gefertigt sind, ein Abschnitt eines extrudierten Profiles ist.

14. Kraftmesser nach Patentanspruch 12, dadurch gekennzeichnet, dass das einzige Stück aus dem die Teile (1 bis 8 und 46, 48) gefertigt sind, durch Drahterodieren aus dem Vollen hergestellt ist.

## Claims

1. A dynamometer with an elastically reducing parallel guide, in which the single load-carrying element (21) is disposed between the elements of the parallel guide (1 to 10) and simultaneously serves for arresting the dynamometer, characterised in that the load-carrying element (21) is directly acted upon by a load carrier (2) and the frame (1), the force-transmitting elements (19, 20, 33) are disposed on the load carrier (2) and a frame (1), the line of application of the force measured by the load-carrying element (21) has a horizontal and also a vertical component, the ratio between them being in the range from 1 : 10 to 10 : 1, and the frame (1), the load carrier (2), plates (3, 4) and tie joints (5 to 8) are manufactured from a single piece.

2. A dynamometer according to claim 1, characterised in that the single piece from which the parts (1 to 8) are manufactured is a portion of an extruded profile.

EP 0 325 619 B1

3. A dynamometer according to claim 1, characterised in that the single piece from which the parts (1 to 8) are manufactured is made by erosion of solid wire.

4. A dynamometer according to claim 1, characterised in that the force-transmitting elements (19, 20) are so disposed on the load carrier (2) and the frame (1) that the load-carrying element (21) is acted upon by compressive forces.

5. A dynamometer according to claim 4, characterised in that the force-transmitting elements are struts (19, 20), at least one of which has two recesses (22).

6. A dynamometer according to claim 4, characterised in that the force-transmitting elements are struts (19, 20), at least one of which has a predetermined flexural point (23).

7. A dynamometer according to claim 4, characterised in that the force-transmitting elements are struts (19, 20) at least one of which has two mutually offset notches (24).

8. A dynamometer according to any of claims 5, 6 or 7, characterised in that two struts (19) are disposed parallel and side by side and symmetrically with an axis (17), the axis (17) extending from the top part of the load carrier to the bottom part of the frame (1) diagonally through the entire dynamometer.

9. A dynamometer according to claim 4, characterised in that the frame (1) and the load carrier (2) each carry at least one connecting piece (36) having a reduced part (41) to which the force-transmitting elements, i.e. the struts (19, 20), are secured.

10. A dynamometer according to claim 1, characterised in that the force-transmitting elements (19, 20) are so disposed on the load carrier (2) and the frame (1) that the load-carrying element (21) is subjected to tensile forces.

11. A dynamometer according to claim 4 or 10, characterised in that the single load-carrying element is a one-string dynamometer.

12. A dynamometer with an elastically reducing parallel guide, in which the single load-carrying element (21) is disposed between the elements of the parallel guide (1 to 10) and simultaneously serves for arresting the dynamometer, characterised in that the load-carrying element (21) is directly acted upon by the parallel plates (3, 4), the force-transmitting elements (19, 20, 33) are connected to the top and bottom plate (3, 4), and the line of application of the force measured by the load-carrying element (21) has a horizontal and a vertical component, the ratio between them being in the range from 1 : 10 to 10 : 1, the tie joint (6) is supplemented by a tie (46) at right angles thereto so as to form a cross-tie, the tie (46) being permanently connected to the load carrier (2) and the top plate (3), the tie joint (8) is supplemented by a tie (48) at right angles thereto to form a cross-tie, the tie (48) being permanently connected to the frame (1) and the bottom plate (4), and the frame (1), the load carrier (2), the plates (3, 4), the tie joints (5 to 8) and the ties (46, 48) are manufactured from a single piece.

13. A dynamometer according to claim 12, characterised in that the single piece from which the parts (1 to 8 and 46, 48) are made is a portion of an extruded profile.

14. A dynamometer according to claim 12, characterised in that the single piece from which the parts (1 to 8 and 46, 48) are made is manufactured by erosion of solid wire.

## Revendications

1. Dynamomètre muni d'un dispositif de guidage parallèle assurant un soutien élastique, dans lequel l'unique enregistreur de charge (21) est disposé entre les éléments du dispositif de guidage parallèle (1 à 10) et sert en même temps de frein pour l'ensemble du dynamomètre, caractérisé en ce que
— l'enregistreur de charge (21) est sollicité directement par le porte-charge (2) et par le bâti (1),
— les organes de transmission de force (19, 20, 33) sont disposés au niveau du porte-charge (2) et du bâti (1) et la ligne d'action de la force mesurée par l'enregistreur de charge (21) a une composante horizontale et une composante verticale dont le rapport se situe dans une plage allant de 1 : 10 à 10 : 1, et
— le bâti (1), le porte-charge (2), les plaques (3, 4) et les articulations en forme de bandes (5 à 8) sont réalisés en une seule pièce.

2. Dynamomètre selon la revendication 1, caractérisé en ce que la pièce unique dans laquelle sont réalisés les éléments (1 à 8) est un tronçon d'un profilé extrudé.

3. Dynamomètre selon la revendication 1, caractérisé en ce que la pièce unique dans laquelle sont réalisés les éléments (1 à 8) est réalisée par érosion au fil dans la masse.

4. Dynamomètre selon la revendication 1, caractérisé en ce que les organes de transmission de force (19, 20) sont disposés sur le porte-charge (2) et sur le bâti (1) de telle sorte que l'enregistreur de charge (21) soit sollicité par des forces de compression.

5. Dynamomètre selon la revendication 4, caractérisé en ce que les organes de transmission de force sont

5

des tiges (19, 20) dont une au moins présente des évidements (22).

6. Dynamomètre selon la revendication 4, caractérisé en ce que les organes de transmission de force sont des tiges (19, 20) dont une au moins présente un point de flexion imposé (23).

7. Dynamomètre selon la revendication 4, caractérisé en ce que les organes de transmission de force sont des tiges (19, 20) dont une au moins présente deux encoches (24) placées face à face et décalées l'une par rapport à l'autre.

8. Dynamomètre selon l'une des revendications 5, 6 et 7, caractérisé en ce qu'il est prévu deux tiges parallèles (19) qui sont disposées l'une près de l'autre et symétriquement par rapport à un axe (17), ledit axe (17) s'étendant en diagonale à travers l'ensemble du dynamomètre, de la partie supérieure du porte-charge (2) à la partie inférieure du bâti (1).

9. Dynamomètre selon la revendication 4, caractérisé en ce que le bâti (1) ainsi que le porte-charge (2) portent chacun au moins un raccord (36) pourvu d'une partie rétrécie (41), auquel est fixé l'organe de transmission de force correspondant conçu comme une tige (19, 20).

10. Dynamomètre selon la revendication 1, caractérisé en ce que les organes de transmission de force (19, 20) sont disposés sur le porte-charge (2) et le bâti (1) de telle sorte que l'enregistreur de charge (21) soit sollicité par des forces de traction.

11. Dynamomètre selon la revendication 4 ou 10, caractérisé en ce que l'unique enregistreur de charge est un dynamomètre à une corde.

12. Dynamomètre muni d'un dispositif de guidage parallèle assurant un soutien élastique, dans lequel l'unique enregistreur de charge (21) est disposé entre les éléments du dispositif de guidage parallèle (1 à 10) et sert en même temps de frein pour l'ensemble du dynamomètre, caractérisé en ce que

— l'enregistreur de charge (21) est sollicité directement par les plaques parallèles (3, 4),

— les organes de transmission de force (19, 20, 33) sont disposés sur les plaques supérieure et inférieure . (3, 4) et la ligne d'action de la force mesurée par l'enregistreur de charge (21) a une composante horizontale et une composante verticale dont le rapport se situe dans une plage allant de 1 : 10 à 10 : 1,

— l'articulation en forme de bande (6) est complétée par une bande (46) perpendiculaire à celle-ci pour former l'articulation en croix, la bande (46) étant reliée de façon fixe au porte-charge (2) et à la plaque supérieure (3),

— l'articulation en forme de bande (8) est complétée par une bande (48) perpendiculaire à celle-ci pour former l'articulation en croix, la bande (48) étant reliée de façon fixe au bâti (2) et à la plaque inférieure (4), et

— le bâti (1), le porte-charge (2), les plaques (3, 4), les articulations en forme de bandes (5 à 8) et les bandes (46, 48) sont réalisés en une seule pièce.

13. Dynamomètre selon la revendication 12, caractérisé en ce que la pièce unique dans laquelle sont réalisés les éléments (1 à 8 et 46, 48) est un tronçon d'un profilé extrudé.

14. Dynamomètre selon la revendication 12, caractérisé en ce que la pièce unique dans laquelle sont réalisés les éléments (1 à 8 et 46, 48) est réalisée par érosion au fil dans la masse.

**Fig.1**

**Fig.2a**

**Fig.2b**

**Fig.3**  **a)**  **b)**  **c)**

20 23

20 22

20 24 24

**Fig.4**

40 36 20 19 37

17 38 2 41 37 39

39 36 38 40

1 41

16   6   34   3   5

31

2

1

32

7   33   4   33   8

**Fig.5**

41

2

3

40

1

42

4

43

**Fig.6**

**Fig.7**

**Fig.8**